# EUROPEAN PATENT SPECIFICATION

(11) **EP 2 668 812 B1**
(45) Date of publication and mention of the grant of the patent: **11.12.2019**
(21) Application number: 12739530.9
(22) Date of filing: 23.01.2012
(51) Int. Cl.: H04W 64/00, G01S 19/01, H04W 88/02, H04W 52/02, G01S 19/34

(54) **INTELLIGENT MANAGEMENT OF LOCATION SENSOR**
INTELLIGENTE VERWALTUNG EINES POSITIONSSENSORS
GESTION INTELLIGENTE DE CAPTEUR DE LOCALISATION

(30) Priority: 25.01.2011 US 201161436154 P; 28.02.2011 US 201113037253
(43) Date of publication of application: 04.12.2013
(73) Proprietor: T-Mobile USA, Inc., Bellevue, WA 98006-1350 (US)
(72) Inventor: HASSAN, Omar, Bellevue, WA 98006-1350 (US); VELUSAMY, Senthil, Kumar, Mulluppadi, Bellevue, WA 98006-1350 (US)
(74) Representative: Grünecker Patent- und Rechtsanwälte PartG mbB
(86) International application number: PCT/US2012/022169
(87) International publication number: WO 2012/102988

(56) References cited:
- US-A1- 2002 127 967
- US-A1- 2002 127 967
- US-A1- 2004 125 014
- US-A1- 2004 209 625
- US-A1- 2005 113 124
- US-A1- 2005 113 124
- US-A1- 2009 098 880
- US-A1- 2010 075 648

## Description

### BACKGROUND

The last several decades have witnessed not just an explosion in the number or type of electronic devices available to the consuming public, but also a corresponding reduction in the sizes of such devices. Today, the consuming public can acquire and use a wide variety of electronic devices, such as cellular phones, mobile phones, Wi-Fi phones, netbooks, laptop computers, handheld computers, tablet computers (such as the Apple iPad™), personal organizers, e-reading devices (such as the Amazon Kindle® and the Barnes & Noble Nook® devices), media players and gaming devices. Many of these devices are capable of either or both of wired or wireless telecommunications. For example, cellular or mobile phones are capable of telephonic and data communication over a cellular telecommunications network. Some dual-mode cellular or mobile phones are additionally capable of wireless communications over Wi-Fi. Similarly, e-reading devices can engage in data communications over cellular telecommunications networks. Such devices are available in a variety of compact form factors, allowing such devices to be held by a single hand and placed in a pocket.

Many mobile telecommunications devices are enabled to use two or more radios. For example, it is increasingly common for cellular phones to be not only enabled to communicate over a cellular telecommunications network, but also over an IP-based network via Wi-Fi, Bluetooth or other short-range wireless protocol. In some cases, such mobile telecommunications devices are additionally enabled with global positioning system (GPS) transceivers/chipsets that permit the devices to obtain their geographic location. For example, many cellular telephones are not only equipped with cellular and Wi-Fi radios, but also GPS functionality which permits them to, for example, report their locations to remote parties, obtain real-time point-to-point directional information, etc. One very attractive service enabled by these multiple functionalities is the ability for one or a group of related mobile telecommunications devices (such as a group of cellular telephones related by virtue of their use by family members) to identify the location of the other devices at any given moment.

A problem common to such devices, however, is battery drain caused by use of some or all of the on-board radios and GPS transceivers/chipsets at the same time. Use of multiple telecommunication device resources at the same time has a very material impact on battery drain, and increases the frequency with which a user of such devices must recharge the battery.

US 2009/0098880 A1 discloses a method for determining location of a mobile terminal which includes repetitively switching power-on and power-off to a GPS receiver circuit. The power-on to power-off duty cycle of the GPS receiver circuit is regulated in response to distance that the mobile terminal has moved from a previously determined location. In some embodiments, the controller circuit is configured to decrease the power-on to power-off duty cycle of the GPS receiver circuit in response to discovering signals from a WLAN device associated with a previously determined and/or defined location where the mobile terminal remained substantially stationary for at least a threshold time. In some further embodiments, the controller circuit is configured to power-on the GPS receiver circuit in response to discovering absence of RF signals from a Bluetooth device and/or a WLAN device with which the mobile terminal was previously communicating. In some further embodiments, the controller circuit is configured to power-on the GPS receiver circuit in response to receiving and identifying a new cellular base station ID from a cellular base station.

US 2004/0125014 A1 discloses a power saving device and method for a GPS receiver which is provided to have the GPS receiver being connected to an oscillation switch and the vibration generated from moving the GPS receiver can be utilized to actuate the oscillation switch so as to turn on the power of the GPS receiver automatically with a power controller. The oscillation switch makes the power controller turning off the power of the GPS receiver automatically so that the power can be saved economically.

US 2002/0127967 A1 provides a system and method for enabling and disabling devices based on movement of the devices as determined by measurements of a received signal strength indicator ("RSSI") within a transceiver. A system for disabling and enabling devices based on movement as determined by RSSI measurements is provided. The system measures fade rate and/or fade duration of the RSSI to calculate movement of the wireless transceiver. In an asset-tracking embodiment, if no movement has been detected, the system powers off the GPS receiver.

US 2005/0113124 A1 discloses equipment and a method by which power consumed by a ranging receiver is reduced without appreciably impairing performance of the GPS receiver, the method including: a step in which a controller reads sensor signals provided by a motion sensor mechanically coupled to the ranging receiver; and a step in which the controller powers down selected components of the ranging receiver based on whether the sensor signals indicate only at most insubstantial motion of the ranging receiver.

It is the object of the present invention to provide improved methods and an improved system for managing the utilization of a location sensor in a mobile device.

The object is achieved by the subject matter of the independent claims.

Embodiments are defined by the dependent claims

### BRIEF DESCRIPTION OF THE DRAWINGS

The detailed description is set forth with reference to the accompanying figures, in which the left-most digit of a reference number identifies the figure in which the reference number first appears. The use of the same reference numbers in different figures indicates similar or identical items or features.
FIG. 1 illustrates an example environment, in accordance with various embodiments.
FIG. 2 illustrates an example telecommunication device system architecture, in accordance with various embodiments.
FIG. 3 illustrates an example computing device of a cloud service, in accordance with various embodiments.
FIGs. 4a-4b together illustrate a flowchart showing an example method of managing utilization of a location sensor based on a location change status of a telecommunication device, in accordance with various embodiments.
FIG. 5 illustrates a flowchart showing an example method of determining, by a cloud service, a location change status of a telecommunication device, in accordance with various embodiments.

### DETAILED DESCRIPTION

Described herein are techniques for managing utilization of a location sensor of a telecommunication device based at least on a location change status of the telecommunication device. As used herein, "location change status" refers to a parameter that indicates whether the telecommunication device has changed or will change locations during a time period. This parameter may have a binary, integer, string or other type of value or values. The time period may correspond to a threshold amount of time, and the locations may each be defined broadly, such as an entire cell of a telecommunication network, or narrowly, such that any movement at all constitutes a change in location. In some embodiments, the telecommunication device may determine the location change status itself or may receive the location change status from a cloud service. Also, the telecommunication device may manage utilization of the location sensor or receive remote management of utilization of the location sensor from the cloud service. In one embodiment, the location sensor is a GPS transceiver and managing the GPS transceiver comprises turning the GPS transceiver on or off.

In various embodiments, the location change status is determined based at least on one or more of telecommunication device connections, a surrounding environment of the telecommunication device, user profiles, or information received from a telecommunication network. Telecommunication device connections may include charging connections to power outlets or vehicle charging outlets and wired or wireless connections to other computing devices, such as desktop and laptop computers, media devices, access points, and telecommunication base stations. Because vehicle charging outlets and some computing devices may be mobile, connection to one of these devices may be utilized along with other connections, such as connections to known stationary devices such as base stations, to determine the location change status.

The surrounding environment may include a plurality of devices, including Wi-Fi devices, cell towers, Bluetooth devices, or RFID tags, and the telecommunication device may scan for these devices and receive their device identifiers. The device identifiers may then be stored as a list and compared to other device identifiers from a later scan to determine if the surrounding environment has changed. The telecommunication device may also determine if the surrounding environment has changed by capturing images of the surrounding environment and comparing the images to determine if the surrounding environment has changed.

The user profiles may include information taken from a user calendar indicating times when a telecommunication device user is at a same location and information provided by the user during, for example, set-up of the device indicating times when the user is typically at a location (e.g., indicating that the user is typically home between 6:00pm and 6:00am). The user profiles may also or instead be generated using learning techniques based on user behavior and movements over time.

In some embodiments, the information received from the telecommunication network may comprise a location change status remotely determined for the telecommunication device or may comprise information that the telecommunication device may utilize in determining the location change status.

Also, in some embodiments, the location change status may be determined based on at least two of telecommunication device connections, a surrounding environment of the telecommunication device, user profiles, or information received from a telecommunication network, with one of these criteria being used to determine the location change status and the other being used to verify it.

### Example Environment

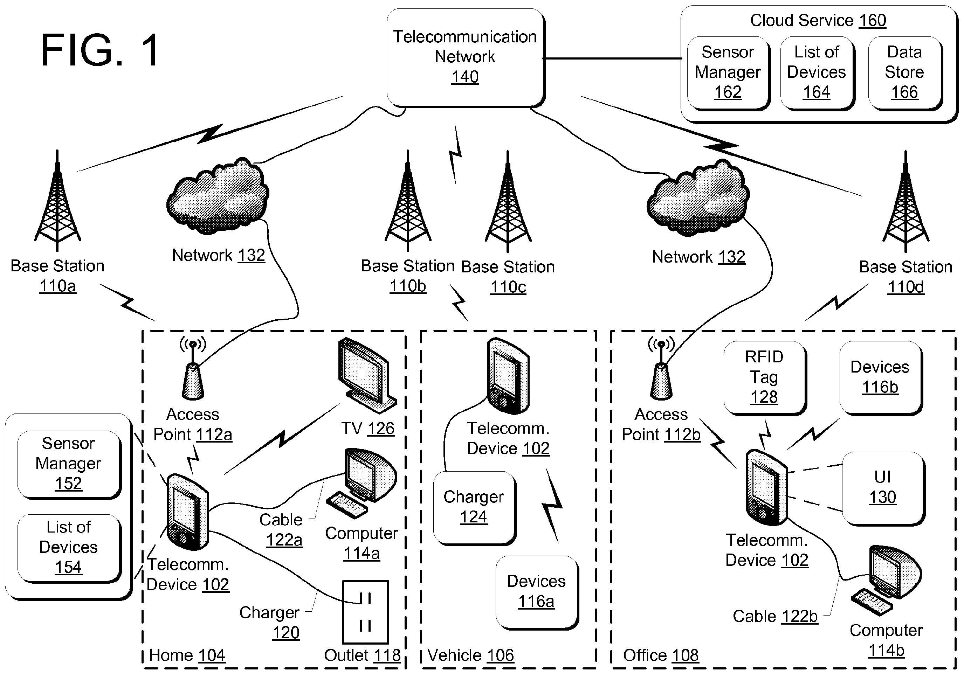

FIG. 1 illustrates an example environment, in accordance with various embodiments. As shown in FIG. 1, a telecommunication device 102 may be located in any number of places, such as a home 104, a vehicle 106, or an office 108, and may manage the use of its location sensor based on whether the telecommunication device user will remain at a place during a time period. The telecommunication device 102 may of course travel with its user to other locations as well, and may stay at any of those locations or in one of locations 104-108 for a period of time. Locations 104-108 are simply provided as example locations. From any of these locations, the telecommunication device 102 may connect to a base station 110, such as one of the base stations 110a-110d shown in FIG. 1, in order to receive telecommunication services. The telecommunication device 102 may also connect to an access point 112, such as one of the access points 112a-1 12b shown in FIG. 1, in order to communicate with a data network or other network.

As further shown, within home 104 or office 108 (or another location), the telecommunication device 102 may connect with a computing device 114, such as the computing device 114a of the home 104 or the computing device 114b of the office 108. Within the vehicle 106 or office 108 (or another location), the telecommunication device 102 may connect with another device 116, such as the device 116a of the vehicle 106 or the device 116b of the office 108. Within the home 104 (or another location), the telecommunication device 102 may connect to a power outlet 118 via a charger cable 120. Other wired connections between the telecommunication device 102 and other devices may include a cable 122a connection with the computing device 114a and a cable 122b connection with the computing device 114b. Also, within home 104 (or another location) the telecommunication device 102 may communicate with a television 126, and within the office 108 (or another location), the telecommunication device 102 may read a radio frequency identifier (RFID) tag 128.

In some embodiments, the telecommunication device 102 may be capable of presenting the user with a user interface 130 allowing the user to provide information about current or future locations. In one embodiment, this user interface 130 may be associated with a calendar. All of the devices and connections 114-128 and the user-entered information provided through the user interface 130 may be utilized to device a location change status for the telecommunication device 102 indicating whether the telecommunication device has changed or will change locations during a time period.

In various embodiments, the access points 112 may provide data connectivity to networks 132, which may in turn provide connectivity to other networks, such as telecommunication network 140. The telecommunication device 102 may also connect to the telecommunication network 140 via a base station 110.

To determine its location change status and manage a location sensor accordingly, the telecommunication device 102 may be equipped with a sensor manager 152 and may stored a list of devices 154, which may list devices currently in a surrounding environment of the telecommunication device 102, such as the devices at one of the locations 104-108.

Also, in some embodiments, the telecommunication device 102 may communicate with a cloud service 160, which may be equipped with a sensor manager 162 to determine the location change status for the telecommunication device 102 or to remotely manage a location sensor of the telecommunication device 102. The cloud service 160 be also stored a list of devices 164 including devices in the surrounding environment of the telecommunication device 102 and a data store 166 which may store other information that can be used by the sensor manager 152 or 162 to determine the location change status.

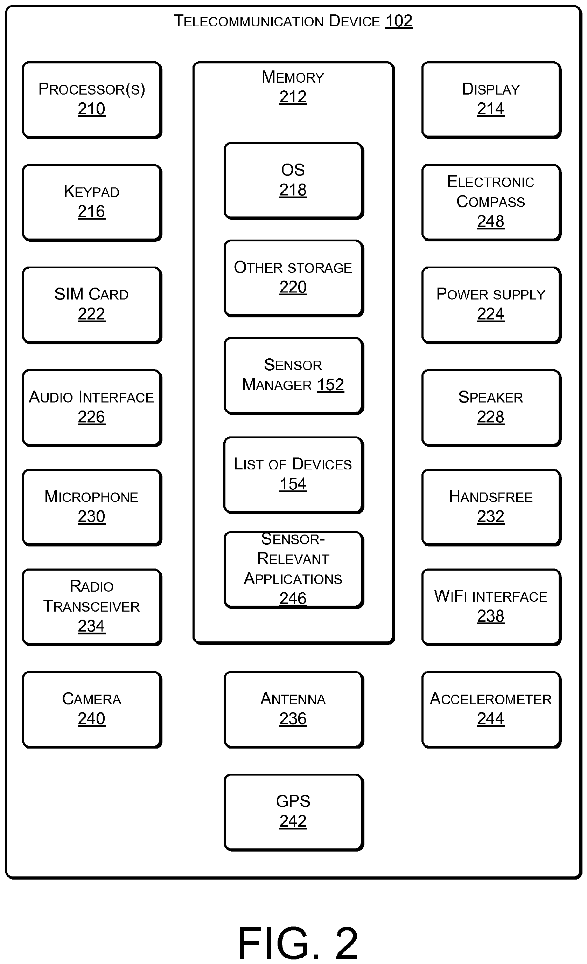

In various embodiments, the telecommunication device 102 may be any type of telecommunication device, including but not limited to a cellular phone, a mobile phone, a Wi-Fi phone, a netbook, a laptop computer, a handheld computer, a tablet computer, a personal organizer, an e-reading device, a media player, or a gaming device. Such a telecommunication device 102 may include at least one transceiver capable of communicating with an access point (such as, but not limited to, a base station 110 associated with a cellular telecommunications network 140 or a Wi-Fi access point 112), and a location sensor, such as GPS transceiver/chipset. As will be described further herein, the location sensor may be used by the telecommunication device 102 to determine the location of the telecommunication device 102. Because the location sensor may consume substantial battery power, the telecommunication device 102 manages utilization of the location sensor by, for example, turning it on or off or otherwise restricting its use. An example system architecture of the telecommunication device 102 is shown in FIG. 2 and described below further with reference to the figure.

As further shown in FIG. 1, the telecommunication device 102 may also include a sensor manager 152 and a list of devices 154. The sensor manager 152 may be any sort of application, module, process, thread, or function executable by the telecommunication device 102 to determine a location change status of the telecommunication device 102 and to manage utilization of the telecommunication device 102's location sensor. The list of devices 154 may be generated and updated by the sensor manager 152 based on a scan of surrounding devices, such as Wi-Fi devices, cell towers, Bluetooth devices, or RFID tags. The list of devices 154 may be any sort of data structure, such as a database, a table, or a file, and may store identifiers of the detected surrounding devices. In some embodiments, the list of devices 154 is stored persistently in memory of the telecommunication device 102 so that the list of devices 154 will be maintained across power cycles. As described further below, the sensor manager 152 may utilize the list of devices 154 to determine if the location of the telecommunication device 102 has changed during a time period.

In some embodiments, telecommunication device 102 may be communicative in a wide variety of ways. In an embodiment, telecommunication device 102 may be a cellular or mobile telephone that can communicate with base stations 110a, 110b, 110c or 110d (also referred to herein as "cell towers"). Multiple base stations 110 are shown because the locations 104-108 may each be in a different cell of a telecommunication network 140 that is associated with a different base station 110. For example, home 104 may be within the cell of base stations 110a. Vehicle 106 may be driven from one cell associated with base station 110b to another associated with base station 110c. And office 108 may be within the cell of base station 110d. These base stations 110 in turn provide connectivity with the telecommunication network 140, which may include circuit-switched networks, packet-switched networks, or both and utilize any telecommunication or data protocol. A service provider of the telecommunication network 140 may in turn provide voice calling, text messaging, instant messaging, email, and media streaming and provisioning services, among many others, via the telecommunication network 140. In some embodiments, one or more of the telecommunication network services may request a location of the telecommunication device 102 to use in service provisioning, which may cause the telecommunication device 102 to utilize its location sensor.

If device 102 is a wireless VoIP phone, or a multi-mode cellular or mobile telephone with VoIP or Unlicensed Mobile Access (UMA)/General Access Network (GAN) capability, it may also be communicative with access points 112a (located in user's home 104) or 112b (located at user's office 108), which may in turn provide access to a telecommunication network 140 or other networks, such as the Internet, through the network 132. In some embodiments, telecommunications network 140 features Internet Protocol (IP) capabilities, allowing it to be communicative with a wide variety of devices over the Internet or another IP-based network. The network 132 may include any one or more wide area networks (WANs), local area networks (LANs), and/or personal area networks (PANs). These networks may be public or private and may support any sort of network protocol such as transmission control protocol/internet protocol (TCP/IP), uniform datagram protocol (UDP), or others. Network 132 may also, be wired, wireless, or may include both wired and wireless networks.

In various embodiments, the telecommunication device 102 may also be connected in a wired or wireless fashion with one or more devices, outlets, etc. in the surrounding environment of the telecommunication device 102. For example, the telecommunication device 102 may wirelessly communicate via any known wireless protocol, including but not limited to WiMax, Bluetooth® and other protocols and connect to one or more devices using the wireless communication. In the home 104, the telecommunication device 102 may wirelessly connect with a television 126. In the vehicle 106, the telecommunication device 102 may wirelessly connect to a device 116a, such as a navigation, radio or other system. In the office 108, the telecommunication device 102 may wireless communicate with an RFID tag 128 via a near field protocol or with another device 116b. In addition, telecommunication device 102 may communicate through a variety of wired means. For example, device 102 may communicate with a desktop computer 114a in user's home 104 or desktop computer 114b in user's workplace 108, via a Universal Serial Bus (USB) cable, firewire, or other wired means, such as via cables 122a or 122b. In addition, telecommunication device 102 may be physically connected to any of a variety of charging mechanisms, such as by a charging unit 120 plugged into a power outlet 118 in user's home 104 or by a cable plugged into a car charging outlet 124 located in the vehicle 106. In one embodiment, the other devices 116a and 116b may be docking stations capable of inductive or conductive charging when the telecommunication device 102 is placed on a charging surface.

In some embodiments, the telecommunication device 102 may also be in communication with a cloud service 160. The communication may be via the telecommunication network 140, through a network 132, or through another network. In one embodiment, the cloud service 160 may comprise a part of the telecommunication network 140. The cloud service 160 may comprise one or more computing devices working in concert to provide one or more services. For example, the cloud service 160 may determine location change statuses for telecommunication devices 102 or remotely manage utilization of locations sensors of the telecommunication devices 102. As shown in FIG. 1, the cloud service 160 may include a sensor manager 162, a list of devices 164, and a data store 166. The sensor manager 162 may perform the same operations as sensor manager 152, but may do so on behalf of a plurality of telecommunication devices 102. The sensor manager 162 may also be configured to communication with telecommunication devices 102, providing information or commands. The list of devices 164 may comprise one or more lists of devices 154 received from telecommunication devices 102. The data store 166 may comprise additional information, such as mappings of device identifiers to indications of whether devices associated with those identifiers are stationary. Such a data store 166 may comprise one or more databases, tables, files, or other data structures.

Returning now to the telecommunication device 102, it is noted a wide variety of telecommunication device applications or other network applications may request location data obtained via the location sensor of the telecommunication device 102. Such applications may include, for example, a family locator application running on a telecommunication device 102 used by a child or dependent person, in which the application periodically powers on the location sensor, obtains location data, then dispatches such data to a remote location to enable a parent or guardian who receives the information to acquires knowledge of the location of the child or dependent. Frequent or periodic use of location sensor may, as mentioned, contribute to rapid draining of the battery of the telecommunication device 102. In such cases, the sensor manager 152 or 162 may manage use of the location sensor in order to better preserve the life of the battery. Specifically, the sensor manager 152 or 162 may temporarily suspend or limit use of the location sensor or may alter the time periods at which the location sensor is used, as discussed herein. When use of the location sensor is suspended or limited, the applications may utilize a last obtained location which may be stored by the telecommunication device 102.

In various embodiments, the sensor manager 152 or 162 may suspend or limit use of the location sensor if telecommunication device 102 based on a location change status. The location change status, as defined above, may indicate if the telecommunication device 102 has moved or remained stationary during a time period or may indicate whether the telecommunication device 102 will move or remain stationary. In one embodiment, the time period used for determining the location change status may be based on a current battery level of the telecommunication device 102 and may be adjusted as the battery power level adjusts. The location change status may be determined by the sensor manager 152 or 162 based on telecommunication device connections, a surrounding environment of the telecommunication device 102, user profiles, information received from the telecommunication network 140 or cloud service 160, outputs from an accelerometer or electronic compass of the telecommunication device 102, information from a vehicle 106 indicating that the vehicle 106 is moving, or on some combination thereof. Suspending or limiting use of the location sensor may comprise turning the location sensor off or permit access to or use of location sensor only once a time period (e.g., an hour).

In some embodiments, the sensor manager 152 or 162 may be configured to suspend or limit access to or use of the location sensor when it detects that telecommunication device 102 is charging. For example, the sensor manager 152 or 162 may detect that telecommunication device 102 is charging when the telecommunication device 102 is physically connected to a battery charger 120 that is plugged into power source 118 or a car charging outlet 124. In another example, the sensor manager 152 or 162 may detect that telecommunication device 102 is charging when it is placed into a docking station. In a further embodiment, the sensor manager 152 or 162 may, upon detecting that telecommunication device 102 is in a charging state, confirm that telecommunication device 102 is stationary by, for example, obtaining data from an accelerometer of the telecommunication device 102 confirming that telecommunication device 102 is not moving or obtaining data from an electronic compass of the telecommunication device 102 confirming that telecommunication device 102 is not being physically reoriented. The sensor manager 152 or 162 may also confirm that the telecommunication device 102 is not changing locations by determining if device identifiers of connected devices (such as base stations 110, access points 112, etc.) or other surrounding devices change during a time period. Also, in one embodiment, the telecommunication device 102 may prompt a user through a user interface 130 to ask if the telecommunication device 102 is to remain at the location/remain stationary. If the telecommunication device is charging and no location change is detected, the sensor manager 152 or 162 may set the location change status to indicate that the telecommunication device 102 is not changing locations.

In an embodiment, the sensor manager 152 or 162 may be configured to suspend or limit access to or use of the location sensor when it detects that telecommunication device 102 is physically connected to other electronic equipment. For example, the sensor manager 152 or 162 may detect that telecommunication device 102 is physically connected when telecommunication device 102 is placed into a docking station. The sensor manager 152 or 162 may be configured, upon detection of physical connection to the docking station, to interrogate the docking station to determine what type of equipment it is or to obtain identifiers associated with the docking station. In other embodiments, the docking station may provide its identifier and/or other information without any need for interrogation. In other examples, telecommunication device 102 may be physically connected, such as via USB cables 122a or 122b, respectively, to a desktop computer 114a in home 104 or a desktop computer 114b in user's workplace 108. The sensor manager 152 or 162 may then determine, by polling a local data store or a remote data store, such as data store 166 of the cloud service 160, whether the docking station/computer 114 is stationary. In other embodiments, the sensor manager 152 or 162 may receive the docking station/computer identifier again at a later time and determine if the identifier has changed during a time period. In yet other embodiments, the telecommunication device 102 may prompt a user through a user interface 130 to ask if the telecommunication device 102 is to remain at the location/remain stationary. In a further embodiment, the sensor manager 152 or 162 may confirm that telecommunication device 102 is stationary while connected to other electronic equipment, by obtaining data from an accelerometer or from an electronic compass. Based on these operations, the sensor manager 152 or 162 may determine whether the telecommunication device 102 has changed or will change locations during a time period and set the location change status accordingly.

In an embodiment, the sensor manager 152 or 162 may be configured to suspend or limit access to or use of the location sensor when it detects that telecommunication device 102 is wirelessly connected via a near-field interface or a protocol to a base station 110 or an access point 112. For example, the sensor manager 152 or 162 may detect that telecommunication device 102 is wirelessly connected to a Wi-Fi access point 112a in the user's home 104 or a Wi-Fi access point 112b at user's workplace 108. In another example, the sensor manager 152 or 162 may detect that the telecommunication device 102 is wirelessly connected to the telecommunication network 140 through a base station 110. In a further example, the sensor manager 152 or 162 may detect that telecommunication device 102 is wirelessly connected via Bluetooth® to a desktop computer 114a or a television 126 in user's home 104, to a navigation or radio unit 116a in user's vehicle 106, or to desktop computer 114b at user's office 108. In another example, telecommunication device 102 may be enabled with near field communications connectivity, permitting it to be communicative with RFID tags, such as RFID tag 128 in user's workplace 108. In each of these examples, the sensor manager 152 or 162 may be configured to suspend or limit access to the location sensor while wirelessly connected via Wi-Fi, Bluetooth® or other near field protocol to other electronics equipment. The sensor manager 152 or 162 may confirm that the electronic equipment is stationary by interrogating the equipment to obtaining identifiers associated with the equipment, or simply by receiving the identifiers and polling a local or remote database (such as data store 166) to obtain information sufficient to confirm that such electronic equipment is stationary. The sensor manager 152 or 162 may also confirm that the electronic equipment and telecommunication device 102 are not changing locations by receiving identifiers of the equipment again at a later time and determining that the identifiers did not change during a time period. For example, the sensor manager 152 or 162 may monitor the cell identifier of the base station 110 that the telecommunication device 102 is communicating with during a time period to make sure that the cell identifier does not change during the time period. In yet other embodiments, the telecommunication device 102 may prompt a user through a user interface 130 to ask if the telecommunication device 102 is to remain at the location/remain stationary. In a further embodiment, the sensor manager 152 or 162 may confirm that telecommunication device 102 is not changing locations while wirelessly connected to other electronic equipment by obtaining data from an accelerometer or an electronic compass. Based on these operations, the sensor manager 152 or 162 may determine whether the telecommunication device 102 has changed or will change locations during a time period and set the location change status accordingly.

In various embodiments, the sensor manager 152 or 162 may be configured to scan the surrounding environment of the telecommunication device 102 for identifiers of devices in the surrounding environment. The devices in the surrounding environment may include Wi-Fi devices, base stations/cell towers, Bluetooth devices, or RFID tags. The telecommunication device 102 may be connected to one or more of these devices and/or may receive device identifiers advertised by one or more of these devices. Using identifiers received through connections or otherwise, the sensor manager 152 or 162 may build a list of devices 154 or 164 that lists identifiers of one or more devices in the surrounding environment. In one embodiment, the sensor manager 152 of the telecommunication device 102 provides the identifiers or the list 154 for building or storage as part of the list 164. At some, later time, the sensor manager 152 or 162 may again scan the surrounding environment for identifiers and compare the received identifiers to the stored list of devices 154 or 164. If some or all of the identifiers have changed, the sensor manager 152 or 162 may determine that the location of the telecommunication device 102 has changed and may set the location change status accordingly. In some embodiments, the comparison of identifiers may be associated with a threshold number of identifiers set to a fraction of identifiers (e.g., 1/5) permitted to change without there being a determination that the location of the telecommunication device 102 has changed. Also, in some embodiments, the sensor manager 152 or 162 set the location change status after the expiration of a time period and may, during that time period, perform more than one scans, list builds, and comparisons. After setting the location change status to indicate that the location has not changed, the sensor manager 152 or 162 may wait for a predetermined time period before again determining the location change status.

In some embodiments, the telecommunication device 102 may be equipped with a camera capable of capturing images of surroundings of the telecommunication device 102. In such embodiments, the sensor manager 152 or 162 may periodically cause the camera to capture images of the surrounding environment over a time period. Using image analysis software, the sensor manager 152 or 162 may determine if the scene depicted in the images has changed during the time period. The sensor manager 152 or 162 may then set the location change status to reflect whether or not the depicted scene has changed. A scene change may be indicative of a location change. In other implementations, the image comparison may be paired with another technique, such as comparing identifiers of a connected device over a time period, to confirm the determination of whether the telecommunication device 102 has changed locations.

In an embodiment, the sensor manager 152 or 162 may suspend or limit or otherwise limit access to or use of the location sensor on certain dates and times when the user of telecommunication device 102 is at a specific location for a duration of time. For example, the sensor manager 152 or 162 may present a user interface 130 to the user of telecommunication device 102 requesting the user to provide data concerning his or her locations at specific times. The locations and times may correspond to patterns, such as daily work ours, times typically at home, weekly gatherings, etc. The user may then provide via the user interface 130, for example, that he or she is regularly at home 104 after 6:00 P.M. Sunday-Thursday until approximately 8:00 A.M. on the following days, and is regularly at work 108 from 8:30 A.M. to 5:30 P.M. on Monday-Friday. In other embodiments, rather than prompting the user via a user interface 130, the sensor manager 152 or 162 may retrieve dates and times that a user is known to be at a location from a calendar, such as a calendar associated with a telecommunication device platform or application. Alternatively or additionally, the sensor manager 152 or 162 may keep track of the time and location of telecommunication device 102 over the course of a time period, such as several days, and learn the user's home/work patterns via learning techniques. For example, the sensor manager 152 or 162 may identify that telecommunication device 102 is regularly at a location associated with work 108 between 8:30 A.M. and 5:30 P.M. Monday through Friday, and regularly at a location associated with home 104 between 6:00 P.M. and 8:00 A.M. Sunday through Thursday. These user-entered, calendar-based, or learned times may comprise one or more user profiles. In any of these examples, the sensor manager 152 or 162 may, having identified one or more times during which the telecommunication device 102 will not change locations, set the location change status at those times to reflect that the telecommunication device 102 is not changing locations.

In some embodiments, the telecommunication device 102 may have multiple modes associated with multiple users, multiple locations, or multiple sets or rules or behaviors. Such modes may be selected by a user or may be selected for a user automatically by the telecommunication device 102. In one embodiment, each mode may be associated with a different user profile or set of user profiles, and the sensor manager 152 or 162 may utilize the user profile or profiles associated with the current mode in determining the location change status.

In an embodiment, the sensor manager 152 or 162 may detect that the location of telecommunication device 102 has been obtained other than through access to or use of the location sensor and therefore suspend or limit such access or use of the location sensor. For example, if telecommunication device 102 is a cellular device, the cellular telecommunications network 140 that is serving it may have obtained its location via TDOA (Time Distance of Arrival), triangulation or other network-based technology and provided such information to telecommunication device 102. In another example, if telecommunication device 102 is wirelessly connected to a Wi-Fi access point, telecommunication device 102 may obtain an identifier (e.g., an IP address or MAC address) associated with the access point, then query a remote data store, such as data store 166, containing the geographic locations of various access points, and may receive such location data associated with the access point identifier from such data store. In another example, if telecommunication device 102 is wirelessly connected to an access point such as access point 112a or 112b, such access points may directly report their geographic location to telecommunication device 102. In all of these embodiments, the sensor manager 152 or 162 may suspend or limit access to or use of the location sensor. The sensor manager 152 or 162 may also determine the location change status of the telecommunication device 102 by determining if received locations change during a time period and may suspend or limit access or use of the location sensor based on the location change status.

In another example, the user of telecommunication device 102 may have provided configuration information to the sensor manager 152 or 162 establishing the location of the telecommunication device 102 when it is physically or wireless connected to other equipment. In such example, the sensor manager 152 or 162 may, upon physical or wireless connection to a new item of equipment, present a user interface 130 on telecommunication device 102 requesting the user to confirm that the item is stationary. If so confirmed, then sensor manager 152 or 162 may then briefly access or use the location sensor to obtain a location of telecommunication device 102, then associate the equipment identifier with the received location and store such data in a local or remote database for future reference. In other embodiments, the sensor manager 152 or 162 may, upon receiving the identifier of a new item of physically or wirelessly connected equipment, access or use the location sensor to obtain location information, then associate the received identifier with the received location, without user interaction. In another embodiment, telecommunication device 102 may be physically or wirelessly connected to other equipment that is, itself, location-sensor-enabled and obtaining its own location information. For example, telecommunication device 102 may be connected to an in-car navigation system 116a which is obtaining location information via its own GPS transceiver/chipset. In such case, the in-car navigation system 116a may provide location information to telecommunication device 102 and the sensor manager 152 or 162 may determine the location change status and/or suspend or limit access to or use of the location sensor based on the location information.

In an embodiment, the sensor manager 152 or 162 may be configured to suspend or limit access to or use of the location sensor when it detects that telecommunication device 102 is not moving or reorienting since it last obtained location data. For example, the sensor manager 152 or 162 may detect via an accelerometer that telecommunication device 102 is not moving, or may detect via an electronic compass that telecommunication device 102 is not reorienting and, upon such detection, determine the location change status to reflect a lack of location change and/or suspend or limit access to or use of the location sensor until such time as motion or reorientation of telecommunication device 102 is detected.

In some embodiments, the telecommunication device 102 may receive an indication from the vehicle 106 that the vehicle is currently in use. Such signals may be provided to cause the telecommunication device 102 to restrict its communications (e.g., no calling or texting while driving). The sensor manager 152 or 162 may detect or be informed of the reception of such signals and set the location change status to indicate that the telecommunication device 102 is changing locations. Based on the location change status, the sensor manager 152 or 162 may then able use of the location sensor if such use was previously restricted.

In various embodiments, the above-mentioned operations are described as being performed by either the sensor manager 152 or the sensor manager 162. In one embodiment, the sensor manager 152 may simply be a thin client that gathers and sends information to the cloud service 160 and receives commands managing utilization of the location sensor in return. In such an example, the sensor manager 162 of the cloud service 160 may determine the location change status from the received information and may generate commands to manage utilization of the telecommunication device location sensor based on the location change status. In another example, the sensor manager 152 may provide information to the cloud service and receive a location change status determined by the sensor manager 162 in return. In a further example, both the sensor manager 152 and 162 may determine the location change status, the determination of one being used to confirm the determination of the other. In another example, the sensor manager 152 may determine the location change status and provide it to the cloud service 160, receiving a command to manage utilization of the location sensor that is generated by sensor manager 162 in return. In yet another example, the sensor manager 152 performs both the determining of the location change status and the managing of the utilization of the location sensor and simply requests and receives information from the cloud service data store 166. In a further embodiment, no cloud service 160 may be involved at all in any of the above-described operations. These examples are provided simply for the sake of illustration and are not meant to limit in any way the operations that may be respectively performed by the sensor manager 152 and the sensor manager 162.

As described above, the sensor manager 152 or 162 may utilize multiple factors in determining the location change status, such as both a charging connection and connected device identifiers. Any possible combination of any, some, or all of these above-described factors may be used by the sensor manager 152 or 162. One factor, for example, may be evaluated first and others may be used to confirm. In other examples, factors such as connections and user profiles may be processed in parallel to determine the location change status.

### Example Systems

FIG. 2 illustrates an example telecommunication device system architecture, in accordance with various embodiments. As shown, the telecommunication device 102 may include a processor(s) 210, memory 212, a display 214, and a keypad 216. The memory 212 may store an operating system (OS) 218, may include other storage 220, an may store the sensor manager 152, the list of devices 154, and sensor-relevant applications 246. The telecommunication device 102 may also include a subscriber identity module (SIM) card 222, a power supply 224, an audio interface 226, a speaker 228, a microphone 230, a hands free jack 232, a radio transceiver 234, an antenna 236, a Wi-Fi interface 238, a camera 240, a GPS transceiver 242, an accelerometer 244, and an electronic compass 248.

In some embodiments, the processor(s) 210 is a central processing unit (CPU), a graphics processing unit (GPU), or both CPU and GPU, or other processing unit or component known in the art.

Memory 212 is an example of computer-readable media for storing instructions which are executed by the processor(s) 210 to perform the various functions described herein. Memory 212 may include volatile memory and/or non-volatile memory (e.g., RAM, ROM, Flash Memory, miniature hard drive, memory card, removable storage media, or the like) as examples of non-transitory computer-readable media.

Telecommunication device 102 includes an operating system (OS) 218, which is resident in memory 212 and executable by processor 210.

Telecommunication device 102 also includes other data storage 220 within memory 212. Other data storage 220 may be used to store information that is retained when the telecommunication device 102 is powered down. For example, applications may use and store persistent information in the other data storage 220.

The sensor manager 152 and list of devices 154, shown as stored in memory 212, are described in greater detail above.

Also, one or more application programs may be loaded into memory 212 and are run by or in conjunction with OS 218. Examples of other application programs include conventional application programs, such as game programs, navigation programs, installation wizard programs, e-mail programs, scheduling programs, PIM (personal information management) programs, word processing programs, spreadsheet programs, Internet web browser programs, and so forth. Among such applications may be location sensor-relevant applications 246 requiring location sensing functionality, such as mapping applications, directional applications, family locater applications, etc.

Display 214 may be a liquid crystal display, or any other type of display. For example, display 214 may be a touch-sensitive touch screen, and can then also act as an input device or keypad, such as for providing a soft-key keyboard, navigation buttons, or the like.

Keypad 216 may be a numeric dialing pad (such as on a typical telecommunication device), a multi-key keyboard (such as a conventional QWERTY keyboard), or one or more other types of keypads. Keypad 216 may be implemented with physical buttons and/or via a touch screen (virtual keypad). Keypad 216 may also include a joystick-like controller and/or designated navigation buttons, or the like.

In some implementations, telecommunication device 102 may include a SIM card 222, which is a removable memory card used to identify a user of the telecommunication device 102 to a network service provider, such as an operator or carrier associated with telecommunications network 140.

Telecommunication device 102 also includes a power supply 224, which may be implemented as one or more batteries.

Telecommunication device 102 may also include an audio interface 226 that is coupled to a built-in speaker 228 and microphone 230. The audio interface 226 may be used to provide audible messages to and receive audible messages from the user of telecommunication device 102. For example, the speaker 228 provides audible output and microphone 230 receives audible input, such as to facilitate a voice conversation. Telecommunication device 102 may include a speakerphone feature to enable telecommunication device 102 to be held away from the user's head during use, thereby facilitating simultaneous viewing of display 214. Audio interface 226 is also in communication with a hands free jack 232 to permit a wired headset including earphones and a microphone to be plugged in to telecommunication device 102 in some implementations to operate in place of built-in speaker 228 and microphone 230.

Telecommunication device 102 may also include a radio transceiver and interface 234 that performs the function of transmitting and receiving radio frequency communications via an antenna 236, which may be communicative with cell towers 110a-110d, or access points 112a and 112b. The radio interface 234 facilitates wireless connectivity between the telecommunication device 102 and various cell towers, base stations, and/or access points. Transmissions to and from the radio interface 234 are conducted under control of the operating system 218.

Telecommunication device 102 also may include a wireless local area network (LAN) interface 238 that performs the function of transmitting and receiving wireless communications using, for example, the IEEE 802.11, 802.16 and/or 802.20 standards. For example, telecommunication device 102 can use Wi-Fi interface 238 to communicate directly with a nearby wireless access point such as for accessing the Internet directly without having to perform the access through the network service provider's network.

Telecommunication device 102 also may include a camera 240 for taking video and still photographs using telecommunication device 102. Some example uses of the camera 240 in determining the location change status of the telecommunication device 102 are described above.

Telecommunication device 102 is also outfitted with a global positioning system (GPS) transceiver/chipset 242 for endowing telecommunication device 102 with various GPS capabilities such as navigation, mapping, or the like. The GPS transceiver/chipset 242 is one example of the telecommunication device location sensor described above.

Telecommunication device 102 may include an accelerometer or other motion sensor 244, for determining position, altitude and/or movement of telecommunication device 102, such as for adjusting display orientation or otherwise detecting motion of telecommunication device 102.

Telecommunication device 102 may include an electronic compass 248 enabled to electronically detect the difference in the earth's magnetic field and, thereby, provide directional information to a user of the telecommunication device. When used in combination with GPS functionality, electronic compass can provide geographic orientation information useful in a variety of location-based applications.

While various components, features, and functions of a telecommunication device 102 have been described in the implementation illustrated in FIG. 2, it should be understood that numerous other configurations, components, features, and the like may be incorporated into telecommunication devices described herein, and that the implementations herein are not limited to any particular configuration for telecommunication devices.

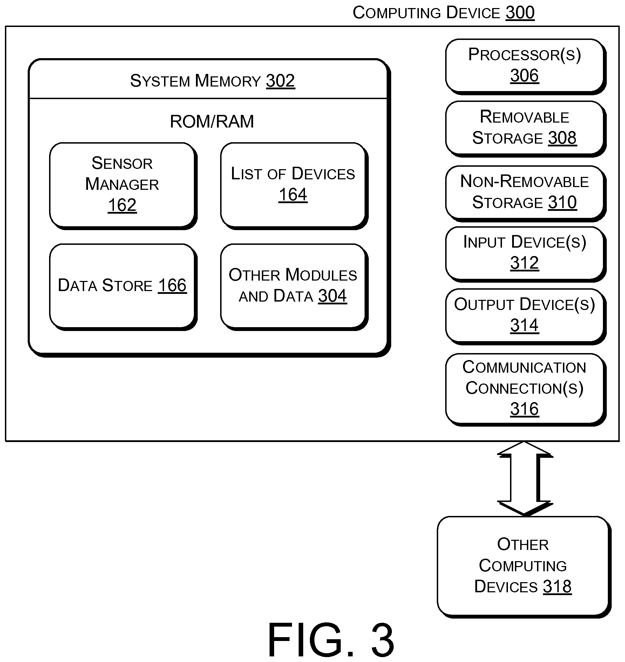

FIG. 3 illustrates an example computing device of a cloud service, in accordance with various embodiments. As illustrated, the computing device 300 comprises a system memory 302. The system memory 302 may store a sensor manager 162, a list of devices 164, a data store 166, and other modules and data 304. Also, the computing device 300 includes processor(s) 306, a removable storage 308 and non-removable storage 310, input device(s) 312, output device(s) 314, and communication connections 316 for communicating with other computing devices 318.

In various embodiments, system memory 302 is volatile (such as RAM), non-volatile (such as ROM, flash memory, etc.) or some combination of the two. Example system memory 302 may include one or more of RAM, ROM, EEPROM, a Flash Memory, a miniature hard drive, a memory card, an optical storage, a magnetic cassette, a magnetic tape, a magnetic disk storage or another magnetic storage devices, or any other medium.

The sensor manager 162, list of devices 164, and data store 166, shown as stored in memory 302, are described in greater detail above. While the sensor manager 162, list of devices 164, and data store 166 are shown in FIG. 3 as being stored on a single computing device 300, they may be stored across multiple computing devices 300 of the cloud service 160, each computing device 300 implementing one of the sensor manager 162, list of devices 164, and data store 166, all of the sensor manager 162, list of devices 164, and data store 166, or parts of one or more of the sensor manager 162, list of devices 164, and data store 166. The other modules and data 304 may be utilized by the computing device 300 to perform or enable performing any action taken by the cloud service 160. The other modules and data 304 may include a platform and applications, and data utilized by the platform and applications.

In some embodiments, the processor(s) 306 is a central processing unit (CPU), a graphics processing unit (GPU), or both CPU and GPU, or other processing unit or component known in the art.

Computing device 300 also includes additional data storage devices (removable and/or non-removable) such as, for example, magnetic disks, optical disks, or tape. Such additional storage is illustrated in Figure 3 by removable storage 308 and non-removable storage 310. Computer storage media may include volatile and nonvolatile, removable and non-removable media implemented in any method or technology for storage of information, such as computer readable instructions, data structures, program modules, or other data. System memory 302, removable storage 308 and non-removable storage 310 are all examples of computer-readable storage media. Computer-readable storage media include, but are not limited to, RAM, ROM, EEPROM, flash memory or other memory technology, CD-ROM, digital versatile disks (DVD) or other optical storage, magnetic cassettes, magnetic tape, magnetic disk storage or other magnetic storage devices, or any other medium which can be used to store the desired information and which can be accessed by computing device 300. Any such computer-readable storage media may be part of computing device 300.

In various embodiment, any or all of system memory 302, removable storage 308, and non-removable storage 310, store programming instructions which, when executed, implement some or all of the above-described operations of the cloud service 160.

Computing device 300 also has input device(s) 312, such as a keyboard, a mouse, a touch-sensitive display, voice input device, etc., and output device(s) 314 such as a display, speakers, a printer, etc. These devices are well known in the art and need not be discussed at length here.

Computing device 300 also contains communication connections 316 that allow the computing device 300 to communicate with other computing devices 318, such as other computing devices 300 of the cloud service 160.

While various components, features, and functions of a computing device 300 have been described in the implementation illustrated in FIG. 3, it should be understood that numerous other configurations, components, features, and the like may be incorporated into the computing devices described herein, and that the implementations herein are not limited to any particular configuration for computing devices.

### Example Operations

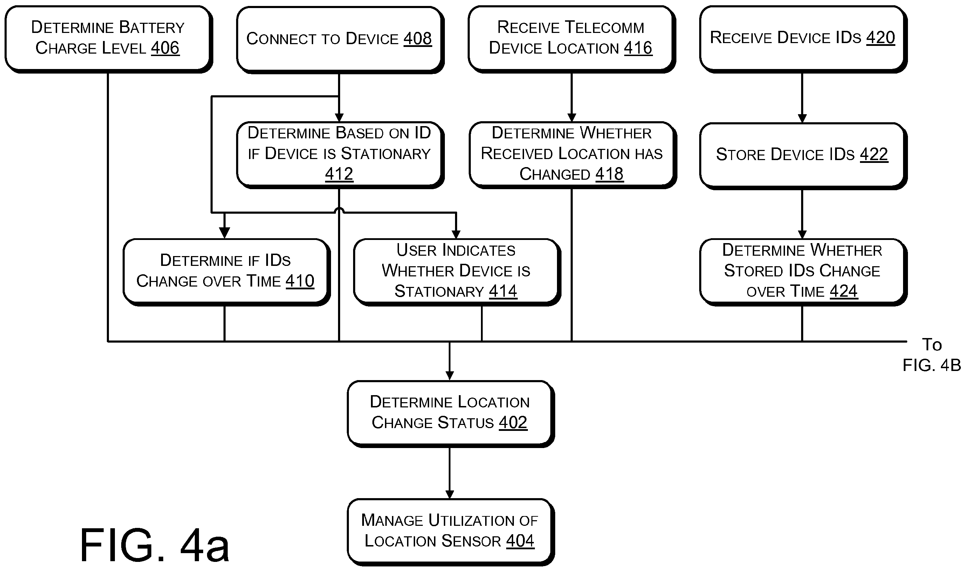

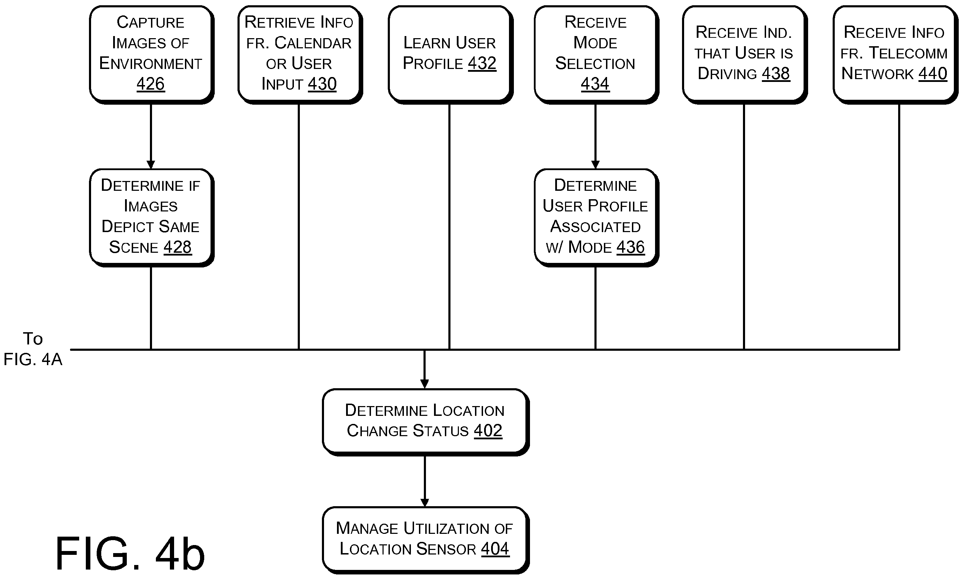

FIGs. 4a-4b together illustrate a flowchart showing an example method of managing utilization of a location sensor based on a location change status of a telecommunication device, in accordance with various embodiments. FIGs. 4a and 4b together constitute a single flowchart shown on multiple pages because of the number of operations illustrated. Accordingly, FIGs. 4a and 4b are hereinafter referred to as "FIG. 4."

At block 402, the telecommunication device may determine a location change status for the telecommunication device based at least on one or more of telecommunication device connections, a surrounding environment, user profiles, or information received from a telecommunication network. The location change status indicates whether the telecommunication device has changed or will change locations during a time period.

At block 404, the telecommunication device may then manage utilization of a location sensor of the telecommunication device based at least on the location change status. The location sensor may be a GPS transceiver, and the managing may include turning off the location sensor in response to determining that the location change status indicates that the telecommunication device has not changed or will not change locations during a time period.

In various embodiments, the telecommunication device connections, the surrounding environment, the user profiles, or the information received from the telecommunication network used by the telecommunication device to perform the determining shown at block 402 may be received or generated in operations shown at blocks 406-440.

At block 406, the telecommunication device may determine the battery charge level and vary the duration of the time period used in determining the location change status.

At block 408, the telecommunication device may connect in a wired or wireless fashion to a power outlet for charging and/or to another computing device. At block 410, the telecommunication device may then determine if an identifier of the connected device, such as a cell identifier or an IP address, changes during a time period and then, at block 402, determine the location change status based on whether the identifier changed during the time period. In one embodiment, the telecommunication device is connected to both a vehicle power outlet and a cellular base station and determines whether the cellular identifier of the base station changes responsive to connecting to the vehicle power outlet. At block 412, the telecommunication device may determine whether an identifier of the connected device indicates that the connected device is stationary by referencing a data store that associates device identifiers with indications of whether the associated devices are stationary. The telecommunication device then determines, at block 402, the location change status based on whether the connected device is stationary. At block 414, the telecommunication device prompts the telecommunication device user to indicate whether the connected device is stationary and, in response to the user indication, determines, at block 402, the location change status based on whether the connected device is stationary.

At block 416, the telecommunication device receives an indication of its location. For example, a base station, telecommunication network, cloud service, or any device may provide a telecommunication device with an indication of its current location. The telecommunication device may then determine, at block 418, whether the received location changes during a time period and determines, at block 402, the location change status based on whether the location changes during the time period. Also, in one embodiment, the telecommunication device may not perform the determining at block 402 and may simply turn off the location sensor at block 404 in response to receiving its location at block 416.

At block 420, the telecommunication device may receive device identifiers of a plurality of devices in the surrounding environment of the telecommunication device. Such devices may include Wi-Fi devices, cell towers, Bluetooth devices, or RFID tags. The telecommunication device may receive the device identifiers in response to scanning for those identifiers. At block 422, the telecommunication device may store the device identifiers as a list of device identifiers. At block 424, the telecommunication device then determines whether the device identifiers in the surrounding environment have changed during a time period based comparing device identifiers received at a later time to the stored list of device identifiers. The telecommunication device may then determine, at block 402, the location change status based on whether the device identifiers in the surrounding environment changed during the time period.

At block 426, the telecommunication device may capture image of the surrounding environment of the telecommunication device during a time period and, at block 428, determine whether the scene depicted in the images changes during the time period. The telecommunication device may then determine, at block 402, the location change status based on whether the scene depicted in the images changes during the time period.

At block 430, the telecommunication device may retrieve information to constitute a user profile from a calendar of the telecommunication device user or from input provided by the user indicating times that the user will be at particular locations. The telecommunication device may then determine, at block 402, the location change status based on the information from the calendar or from the user.

At block 432, the telecommunication device may automatically learn a user profile using one or more learning techniques, the learned information describing days and times of day during which the telecommunication device is at a same location. The telecommunication device may then determine, at block 402, the location change status based on the learned information.

At block 434, the telecommunication device may receive a selection of a telecommunication device mode and, at block 436, determine a user profile based on the mode. The telecommunication device may then determine, at block 402, the location change status based on the determined user profile.

At block 438, the telecommunication device may receive an indication that the telecommunication device user is operating a motor vehicle from an application, such as a telecommunication device application. The telecommunication device may then determine, at block 402, that the location change status indicates that the telecommunication device user is changing locations based on the received indication.

At block 440, the telecommunication device receives information from the telecommunication network that includes or may be used to generate the location change status and then determines, at block 402, the location change status based on the received information.

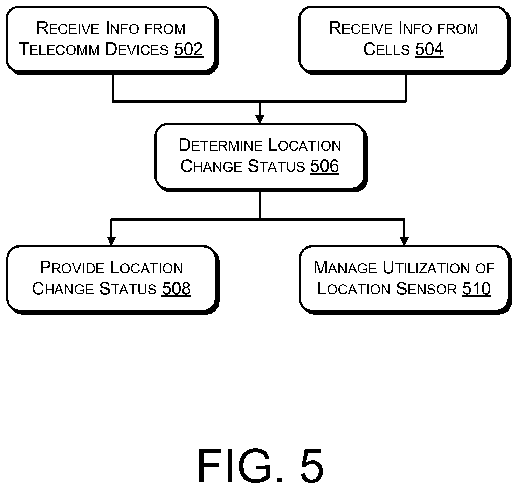

FIG. 5 illustrates a flowchart showing an example method of determining, by a cloud service, a location change status of a telecommunication device, in accordance with various embodiments. At block 502, a one or more computing devices of a cloud service receive information associated with the telecommunication device from the telecommunication device, and the information includes at least one of telecommunication device connections, an environment surrounding the telecommunication device, or user profiles. At block 504, the cloud service receives information associated with the telecommunication device from one or more cells that the telecommunication device is connected to and includes timestamps associated with the connections.

At block 506, the cloud service may determine a location change status for the telecommunication device based on the received information. The cloud service may then perform at least one of the operations shown at blocks 508 and 510. At block 508, the cloud service may provide the location change status to the telecommunication device. At block 510, the cloud service may manage utilization of a location sensor of the telecommunication device based at least on the location change status.

Although the subject matter has been described in language specific to structural features and/or methodological acts, it is to be understood that the subject matter defined in the appended claims is not necessarily limited to the specific features or acts described. Rather, the specific features and acts are disclosed as exemplary forms of implementing the claims.

## Claims

1. A method comprising:
determining (402; 506), by a telecommunication device (102), a location change status for the telecommunication device based on a surrounding environment of the telecommunication device (102); and
managing (404), by the telecommunication device, utilization of a location sensor of the telecommunication device based at least on the location change status,
wherein the surrounding environment includes a plurality of devices (116) capable of communicating device identifiers **characterized in that**:
determining the location change status comprises receiving the device identifiers of the devices, storing the device identifiers, and determining whether the stored device identifiers change during a time period.

2. A method comprising:
determining (402; 506), by a telecommunication device (102), a location change status for the telecommunication device based on a surrounding environment of the telecommunication device (102); and
managing (404), by the telecommunication device, utilization of a location sensor of the telecommunication device based at least on the location change status,
**characterized in that**:
determining the location change status comprises capturing (426) images of the surrounding environment and determining (428) if the captured images include a same scene during a time period.

3. The method of claim 1 or 2, wherein the location change status indicates whether the telecommunication device has changed or will change locations during a time period.

4. The method of claim 3, wherein managing the utilization of the location sensor comprises turning off the location sensor in response to determining that the location change status indicates that the telecommunication device has not changed or will not change locations during a time period.

5. The method of claim 3, wherein the duration of the time period varies based on a battery charge level (406).

6. The method of claim 1 or 2, wherein the telecommunication device connections include a charging connection (120) to a power outlet (118) or a connection (122) to a computing device (114).

7. The method of claim 6, wherein determining the location change status comprises detecting that the telecommunication device is connected to the power outlet or the computing device and scanning for network identifiers or device identifiers over a time period.

8. The method of claim 6, wherein determining the location change status comprises detecting that the telecommunication device is connected to the power outlet or the computing device and determining based on an identifier of the power outlet or computing device whether the power outlet or computing device is stationary.

9. The method of claim 6, wherein determining the location change status comprises detecting that the telecommunication device is connected to the power outlet or the computing device and providing a mechanism (130) for a telecommunication device user to indicate whether the telecommunication device is stationary.

10. The method of claim 1, wherein determining the location change status comprises receiving a location from a device connected to the telecommunication device over a period of time and determining that the received location is not changing.

11. The method of claim 1 or 2, wherein the location change status is further determined at least in part based on user profiles (432).

12. The method of claim 11, wherein the user profiles comprises information provided about times during which the telecommunication device will be at a same location.

13. The method of claim 1 or 2, wherein determining the location change status based on the surrounding environment comprises receiving an indication from a telecommunication device application that a telecommunication device user is operating a motor vehicle (106).

14. One or more computer storage devices comprising computer-executable instructions stored thereon and configured to program one or more computing devices to perform the method of one of claims 1 to 13.

15. A telecommunication device comprising:
a processor (210);
a location sensor being a global positioning system, GPS, transceiver (242) communicatively coupled to the processor; and
a module (152) configured to be operated by the processor to perform the method of one of claims 1 to 13.

## Patentansprüche

1. Verfahren, umfassend:
Bestimmen (402; 506), durch ein Telekommunikationsgerät (102), eines Positionsänderungsstatus für das Telekommunikationsgerät basierend auf einer Umgebung des Telekommunikationsgeräts (102), und
Verwalten (404), durch das Telekommunikationsgerät, der Nutzung eines Positionssensors des Telekommunikationsgeräts basierend wenigstens auf dem Positionsänderungsstatus,
wobei die Umgebung eine Vielzahl von Geräten (116) enthält, die Gerätekennzeichnungen kommunizieren können,
**dadurch gekennzeichnet, dass**:
das Bestimmen des Positionsänderungsstatus das Empfangen der Gerätekennzeichnungen der Geräte, das Speichern der Gerätekennzeichnungen und das Bestimmen, ob sich die gespeicherten Gerätekennzeichnungen während einer Zeitperiode ändern, umfasst.

2. Verfahren, umfassend:
Bestimmen (402; 506), durch ein Telekommunikationsgerät (102), eines Positionsänderungsstatus für das Telekommunikationsgerät basierend auf einer Umgebung des Telekommunikationsgeräts (102), und
Verwalten (404), durch das Telekommunikationsgerät, der Nutzung eines Positionssensors des Telekommunikationsgeräts basierend wenigstens auf dem Positionsänderungsstatus,
**dadurch gekennzeichnet, dass**:
das Bestimmen des Positionsänderungsstatus das Aufnehmen (426) von Bildern der Umgebung und das Bestimmen (428), ob die aufgenommenen Bilder eine gleiche Szene innerhalb einer Zeitperiode enthalten, umfasst.

3. Verfahren nach Anspruch 1 oder 2, wobei der Positionsänderungsstatus angibt, ob das Telekommunikationsgerät seine Position innerhalb einer Zeitperiode geändert hat oder ändern wird.

4. Verfahren nach Anspruch 3, wobei das Verwalten der Nutzung des Positionssensors das Ausschalten des Positionssensors in Reaktion auf das Bestimmen, dass der Positionsänderungsstatus angibt, dass das Telekommunikationsgerät seine Position nicht innerhalb einer Zeitperiode geändert hat oder ändern wird, umfasst.

5. Verfahren nach Anspruch 3, wobei die Dauer der Zeitperiode basierend auf einem Batterieladestand (406) variiert.

6. Verfahren nach Anspruch 1 oder 2, wobei die Telekommunikationsgerätverbindungen eine Ladeverbindung (120) mit einer Steckdose (118) oder eine Verbindung (122) mit einem Rechengerät (114) umfassen.

7. Verfahren nach Anspruch 6, wobei das Bestimmen des Positionsänderungsstatus das Erfassen, dass das Telekommunikationsgerät mit der Steckdose oder dem Rechengerät verbunden ist, und das Suchen nach Netzwerkkennzeichnungen oder Gerätekennzeichnungen über eine Zeitperiode umfasst.

8. Verfahren nach Anspruch 6, wobei das Bestimmen, dass der Positionsänderungsstatus das Erfassen, dass das Telekommunikationsgerät mit der Steckdose oder dem Rechengerät verbunden ist, und das Bestimmen basierend auf einer Kennzeichnung der Steckdose oder des Rechengeräts, ob die Steckdose oder das Rechengerät stationär ist, umfasst.

9. Verfahren nach Anspruch 6, wobei das Bestimmen des Positionsänderungsstatus das Erfassen, dass das Telekommunikationsgerät mit der Steckdose oder dem Rechengerät verbunden ist, und das Vorsehen eines Mechanismus (130) für einen Telekommunikationsgerätbenutzer für das Angeben, ob das Telekommunikationsgerät stationär ist, umfasst.

10. Verfahren nach Anspruch 1, wobei das Bestimmen des Positionsänderungsstatus das Empfangen einer Position von einem mit dem Telekommunikationsgerät verbundenen Gerät über eine Zeitperiode und das Bestimmen, dass die empfangene Position sich nicht ändert, umfasst.

11. Verfahren nach Anspruch 1 oder 2, wobei der Positionsänderungsstatus weiterhin wenigstens teilweise basierend auf Benutzerprofilen (432) bestimmt wird.

12. Verfahren nach Anspruch 11, wobei die Benutzerprofile Informationen zu Zeiten, während welcher das Telekommunikationsgerät an der gleichen Position ist, umfasst.

13. Verfahren nach Anspruch 1 oder 2, wobei das Bestimmen des Positionsänderungsstatus basierend auf der Umgebung das Empfangen einer Angabe von einer Telekommunikationsgerätanwendung, dass ein Telekommunikationsgerätbenutzer ein Kraftfahrzeug (106) betätigt, umfasst.

14. Ein oder mehrere Computerspeichereinrichtungen mit darauf gespeicherten computerausführbaren Befehlen, die konfiguriert sind zum Programmieren eines oder mehrerer Rechengeräte für das Durchführen des Verfahrens gemäß den Ansprüchen 1 bis 13.

15. Telekommunikationsgerät, umfassend:
einen Prozessor (210),
einen Positionssensor, der ein GPS (Global Positioning System)-Sendeempfänger (242) ist, der kommunikativ mit dem Prozessor gekoppelt ist, und
ein Modul (152), das konfiguriert ist, um durch den Prozessor für das Durchführen des Verfahrens gemäß den Ansprüchen 1 bis 13 betrieben zu werden.

## Revendications

1. Procédé comprenant :
une détermination (402 ; 506), par un dispositif de télécommunication (102), d'un état de changement de position pour le dispositif de télécommunication selon un environnement immédiat du dispositif de télécommunication (102) ; et
une gestion (404), par le dispositif de télécommunication, d'une utilisation d'un capteur de position du dispositif de télécommunication selon au moins l'état de changement de position,
dans lequel l'environnement immédiat inclut une pluralité de dispositifs (116) capables de communiquer des identificateurs de dispositif
**caractérisé en ce que** :
une détermination de l'état de changement de position comprend une réception des identificateurs de dispositif des dispositifs, un stockage des identificateurs de dispositif et une détermination que les identificateurs de dispositif stockés changent ou non au cours d'une période temporelle.

2. Procédé comprenant :
une détermination (402 ; 506), par un dispositif de télécommunication (102), d'un état de changement de position pour le dispositif de télécommunication selon un environnement immédiat du dispositif de télécommunication (102) ; et
une gestion (404), par le dispositif de télécommunication, d'une utilisation d'un capteur de position du dispositif de télécommunication selon au moins l'état de changement de position,
**caractérisé en ce que** :
une détermination de l'état de changement de position comprend une capture (426) d'images de l'environnement immédiat et une détermination (428) que les images capturées incluent ou non une même scène au cours d'une période temporelle.

3. Le procédé de la revendication 1 ou 2, dans lequel l'état de changement de position indique si le dispositif de télécommunication a changé ou changera ou non de position au cours d'une période temporelle.

4. Le procédé de la revendication 3, dans lequel une gestion de l'utilisation du capteur de position comprend une désactivation du capteur de position en réponse à une détermination que l'état de changement de position indique que le dispositif de télécommunication n'a pas changé ou ne changera pas de position au cours d'une période temporelle.

5. Le procédé de la revendication 3, dans lequel la durée de la période temporelle varie selon un niveau de charge de batterie (406).

6. Le procédé de la revendication 1 ou 2, dans lequel les connexions de dispositif de télécommunication incluent une connexion de charge (120) à une prise d'alimentation (118) ou une connexion (122) à un dispositif informatique (114).

7. Le procédé de la revendication 6, dans lequel une détermination de l'état de changement de position comprend une détection que le dispositif de télécommunication est connecté à la prise d'alimentation ou au dispositif informatique et une analyse d'identificateurs de réseau ou d'identificateurs de dispositif sur une période temporelle.

8. Le procédé de la revendication 6, dans lequel une détermination de l'état de changement de position comprend une détection que le dispositif de télécommunication est connecté à la prise d'alimentation ou au dispositif informatique et détermination selon un identificateur de la prise d'alimentation ou du dispositif informatique que la prise d'alimentation ou le dispositif informatique est ou non stationnaire.

9. Le procédé de la revendication 6, dans lequel une détermination de l'état de changement de position comprend une détection que le dispositif de télécommunication est connecté à la prise d'alimentation ou au dispositif informatique et une fourniture d'un mécanisme (130) pour un utilisateur du dispositif de télécommunication pour indiquer si le dispositif de télécommunication est ou non stationnaire.

10. Le procédé de la revendication 1, dans lequel une détermination de l'état de changement de position comprend une réception d'une position depuis un dispositif connecté au dispositif de télécommunication sur une période de temps et une détermination que la position reçue ne change pas.

11. Le procédé de la revendication 1 ou 2, dans lequel l'état de changement de position est déterminé en outre au moins en partie selon des profils d'utilisateur (432) .

12. Le procédé de la revendication 11, dans lequel les profils d'utilisateur comprennent des informations fournies à propos de durées au cours desquelles le dispositif de télécommunication sera à une même position.

13. Le procédé de la revendication 1 ou 2, dans lequel une détermination de l'état de changement de position selon l'environnement immédiat comprend une réception d'une indication d'une application de dispositif de télécommunication qu'un utilisateur de dispositif de télécommunication utilise un véhicule à moteur (106).

14. Un ou plusieurs dispositifs de stockage informatiques comprenant des instructions exécutables par un ordinateur stockées sur ceux-ci et configurées pour programmer un ou plusieurs dispositifs informatiques pour exécuter le procédé de l'une des revendications 1 à 13.

15. Dispositif de télécommunication comprenant :
un processeur (210) ;
un capteur de position consistant en un émetteur-récepteur GPS (Global Positioning System) (242) couplé par voie de communication au processeur ; et
un module (152) configuré pour être exploité par le processeur pour exécuter le procédé de l'une des revendications 1 à 13.
